Europäisches Patentamt

European Patent Office

Office européen des brevets

(11) Veröffentlichungsnummer: **0 428 966 A1**

(12) **EUROPÄISCHE PATENTANMELDUNG**

(21) Anmeldenummer: 90121565.7

(22) Anmeldetag: 10.11.90

(51) Int. Cl.5: **A01M 7/00**

(30) Priorität: 24.11.89 DE 3938999

(43) Veröffentlichungstag der Anmeldung:
29.05.91 Patentblatt 91/22

(84) Benannte Vertragsstaaten:
**BE DE DK FR GB NL**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Wiemeyer, Benno**
**Im Sande 6**
**W-4531 Lotte-Halen(DE)**

(54) **Dosierarmatur für eine landwirtschaftliche Feldspritze.**

(57) Dosierarmatur für eine landwirtschaftliche Feldspritze, die einen Flüssigkeitstank, eine Pumpe, Flüssigkeitsleitungen und Ausbringelemente aufweist, wobei die Dosierarmatur Anschlüsse, beispielsweise für eine von der Pumpe kommende Druckleitung, Rücklaufleitungen (en) Druck- und/oder Durchflußventil(e), für die Ausbringelemente etc. aufweist. Um auf einfache Weise eine kostengünstige Dosierarmatur zu schaffen, ist vorgesehen, daß sämtliche Anschlüsse und Elemente (10,12,14,17,18,19,22) der Dosierarmatur (11) in einem Bauteil (6) integriert sind.

FIG.1

## DOSIERARMATUR FÜR EINE LANDWIRTSCHAFTLICHE FELDSPRITZE

Die Erfindung betrifft eine Dosierarmatur für eine landwirtschaftliche Feldspritze gemäß des Oberbegriffes des Patentanspruches 1.

Derartige Dosierarmaturen sind in der Praxis bekannt geworden. Diese Dosierarmaturen bestehen aus mehreren Bauteilen, die im Baukastensystem zusammengesetzt sind.

Dieses System hat Nachteile. Insbesondere müssen die Stellen, an denen die Einzelbauteile zusammengesetzt sind, sicher abgedichtet sein, welches dieses System relativ teuer macht. Acuh baut die bekannte Dosierarmatur relativ groß.

Der Erfindung liegt nun die Aufgabe zugrunde, auf einfache Weise eine kostengünstige Dosierarmatur zu schaffen.

Diese Aufgabe wird erfindungsgemäß dadurch gelöst, daß sämtliche Anschlüsse und Elemente der Dosierarmatur in einem Bauteil integriert sind. Infolge dieser Maßnahme ergibt sich eine äußerst kompakte und kostengünstige Anordnung für eine Dosierarmatur. In einfacher Weise können die Anschlüsse und Elemente der Dosierarmatur in den eine Öffnung des Flüssigkeitstanks verschließenden Deckel angeordnet werden. Hierdurch werden die Elemente geschützt untergebracht. Darüber hinaus wird ein wesentlicher Beitrag für die Sicherheit und für den Umweltschutz geleistet, denn falls die Dosierarmatur undicht werden sollte, tritt die Leckflüssigkeit nicht ins Freie aus, sondern gelangt in den Flüssigkeitstank.

Es ist bei einer anderen Ausführung möglich die Anschlüsse und Elemente der Dosierarmatur in der Wandung des Flüssigkeitstanks unterzubringen.

Dadurch, daß unterhalb der Dosierarmatur eine Auffangwanne zum Auffangen von Leckflüssigkeit angeordnet ist, und daß von der Auffangwanne eine Leitung in den unteren Bereich des Flüssigkeitstanks und/oder in die Saugleitung führt, wird auch bei empfindlichen Spritzmitteln, die zum Schäumen neigen, ein Aufschäumen vermieden. Auch wird dadurch erreicht, daß die Leitung von der Auffangwanne unmittelbar in die Saugleitung mündet, daß diese Dosierarmatur sich auch bei Feldspritzen mit Direkteinspeisung des Spritzmittels in das Wasser eingespritzt werden kann.

Weitere Einzelheiten der Erfindung sind der Beispielsbeschreibung und den Zeichnungen zu entnehmen. Hierbei zeigten

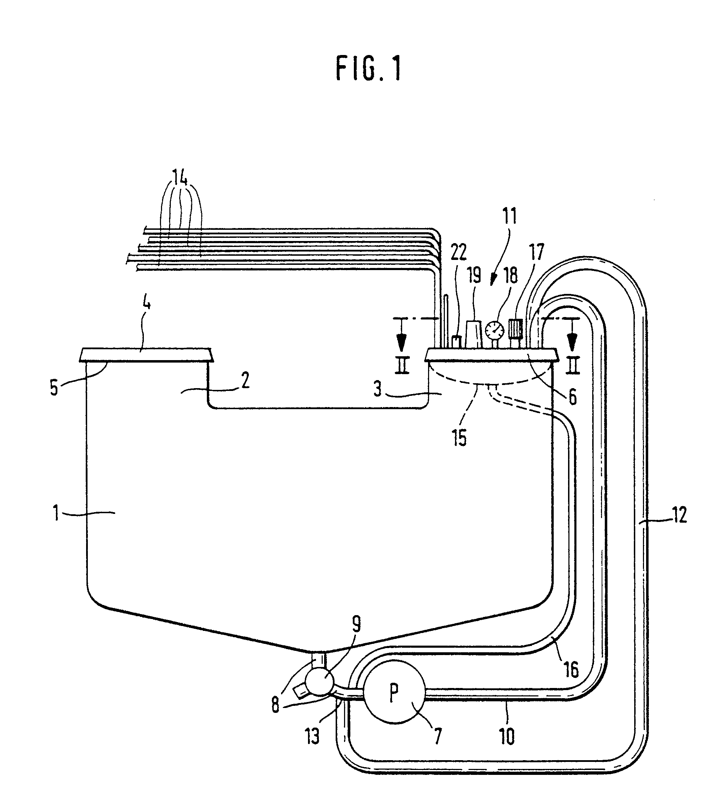

Fig. 1 eine Feldspritze mit erfindungsgemäßer Dosierarmatur in der Ansicht von hinten in schematischer Darstellungsweise und

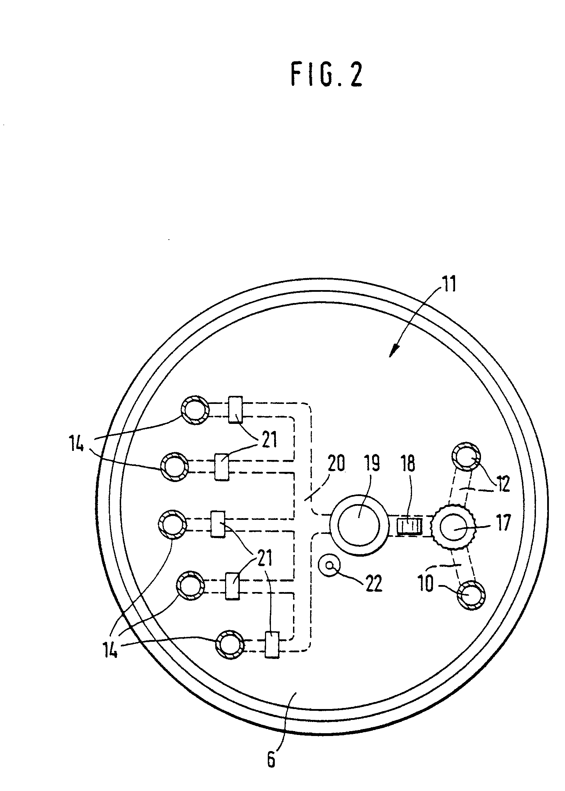

Fig. 2 eine Draufsicht gemäß Ansicht II - II auf die erfindungsgemäße Dosierarmatur in schematischer Darstellungsweise in vergrößertem Maßstab.

Die Feldspritze weist den Flüssigkeitstank 1 auf, der in bekannter und daher nicht dargestellter Weise an einem Rahmen angeordnet ist, über den die Feldspritze mittels Dreipunktkupplungselementen an den Kraftheber eines Schleppers anzukuppeln ist. Desweiteren weist der Flüssig keitstank 2 die beiden Dome 2 und 3 auf. Der Dom 2 ist mit dem Deckel 4 verschlossen. Der Deckel 4 ist abnehmbar auf dem Dom 2 angeordnet, so daß nach Abnahme des Deckels 4 über die Einfüllöffnung 5 der Flüssigkeitstank 1 mit Wasser und Pflanzenbehandlungs-oder Düngemittel zu befüllen ist. Der Dom 3 ist durch den Deckel 6 verschlossen.

Desweiteren weist die Feldspritze die Pumpe 7, die unter dem Flüssigkeitstank 1 an der tiefsten Stelle angeordnete Saugleitung 8 auf, welche zu der Pumpe 7 führt und in der der Dreiwegehahn 9, der noch zusätzlich einen Filter aufweist, angeordnet ist. Von der Pumpe 7 führt die Druckleitung 10 zu der in dem Deckel 6 integriert angeordneten Dosierarmatur 11. Von der Dosierarmatur 11 zweigt eine Rückführleitung 12 ab, die an der Stelle 13 in die Saugleitung 8 einmündet. Von der Dosierarmatur 11 führen die Stritzleitungen 14 zu den nicht dargestellten Ausbringdüsen. Desweiteren kann von der Dosierarmatur 11 eine nicht dargestellte Rührleitung in den Flüssigkeitstank 1 führen. In dem Deckel 6 sind sämtliche Anschlüsse und Elemente der Dosierarmatur 11 integriert angeordnet, so daß sich sämtliche Anschlüsse und Elemente der Dosierarmatur in einem Bauteil befinden. Unterhalb der Dosierarmatur 11 ist die Auffangwanne 15 zum evtl. Auffangen von Leckflüssigkeiten angeordnet. Von der Auffangwanne 15 führt eine Leitung 16 in die Saugleitung 8. Es ist auch möglich, die Leitung 16 in den unteren Bereich des Flüssigkeitstankes münden zu lassen.

Die in dem Deckel 6 angeordnete Dosierarmatur 11 weist den Druckanschluß 10, der von der Pumpe 7 kommt auf. Desweiteren ist in dem Deckel 6 das Überdruck- und Einstellventil 17 angeordnet. Von dem Ventil 17 zweigt die Rückführleitung 12 ab. Desweiteren weist die Dosierarmatur 11 das Manometer 18 und den Filter 19 auf. Von dem Filter 19 führt die Verteilerleitung 20 zu den einzelnen Ausbringleitungen 14. Jeder Ausbringleitung 14 ist ein Absperrhahn 21 zugeordnet, so daß durch Öffnen oder Abschalten der Absperrhähne der Zufluß zu den einzelnen Ausbringleitungen 14 geöffnet oder geschlossen werden kann. Außerdem ist in dem Deckel 6 das Tankentlüftungsventil 22 angeordnet.

Es sei an dieser Stelle darauf hingewiesen, daß die Dosierarmatur 11, anstelle sie in dem Deckel 6 anzuordnen es auch möglich ist, in einen anderen Bauteil anzuordnen, welches dann in der Wandung des Flüssigkeitstankes 1 angeordnet ist.

Der Deckel 6, in welchem die Anschlüsse und Armaturen der Dosierarmatur 11 angeordnet sind, ist als Kunststoffspritzteil ausgebildet. Hierdurch ergibt sich eine kostengünstige Herstellung für die integrierte Anordnung der Elemente der Dosierarmatur in einem Bauteil. Außerdem sind die Elemente paßgenau herzustellen.

**Ansprüche**

1. Dosierarmatur für eine landwirtschaftliche Feldspritze, die einen Flüssigkeitstank, eine Pumpe, Flüssigkeitsleitungen und Ausbringelemente aufweist, wobei die Dosierarmatur Anschlüsse, beispielsweise für eine von der Pumpe kommende Druckleitung, Rücklaufleitungen (en) Druck- und/oder Durchflußventil(e), für die Ausbringelemente etc. aufweist, dadurch gekennzeichnet, daß sämtliche Anschlüsse und Elemente (10,12,14,17,18,19,20,21,22) des Dosierarmatur (11) in einem Bauteil (6) integriert sind.

2. Dosierarmatur nach Anspruch 1, dadurch gekennzeichnet, daß die Anschlüsse und Elemente (10,12,14,17,18,19,20,21,22) der Dosierarmatur (11) ind em eine Öffnung des Flüssigkeitstanks (1) verschließenden Deckel (6) angeordnet sind.

3. Dosierarmatur nach Anspruch 1, dadurch gekennzeichnet, daß die Anschlüsse und Elemente der Dosierarmatur in der Wandung des Flüssigkeitstanks angeordnet sind.

4. Dosierarmatur nach einem oder mehreren vorstehenden Ansprüchen, dadurch gekennzeichnet, daß unterhalb der Dosierarmatur (11) eine Auffangwanne (15) zum Auffangen von Leckflüssigkeiten angeordnet ist, daß von der Auffangwanne (15) eine Leitung (16) in den unteren Bereich des Flüssigkeitstanks (1) und/oder in die Saugleitung (8) führt.

# FIG.1

EP 0 428 966 A1

FIG.2

5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-2118011 (THE PLESSEY CO.) <br> * Seite 1, Zeilen 64 - 94; Figur 2 * <br> --- | 1, 2 | A01M7/00 |
| A | DE-U-8711752 (MASCHINENFABRIK RAU GMBH) <br> * Anspruch 1; Figur 1 * <br> --- | 1 | |
| A | DE-A-3529357 (AMAZONEN-WERKE H. DREYER GMBH & CO. KG) <br> * Anspruch 1; Figur 1 * <br> --- | 1 | |
| A | DE-U-7522767 (GLORIA-WERKE H. SCHULTE-FRANKENFELD KG) <br> * Anspruch 1; Figuren 1, 2 * <br> --- | 1, 2 | |
| A | US-A-4269356 (D. D. ROSE) <br> --- | | |
| A | GB-A-2113962 (J. O. ROACH) <br> --- | | |
| A | Motorisation et Technique Agricole no. 50, Februar 1983, Bois-le-Roi, FR Seiten 161 - 179; "Régulation - Où est la vérité ?" <br> ----- | | |

RECHERCHIERTE SACHGEBIETE (Int. Cl.5 )

A01C
A01M
B05B

Der vorliegende Recherchenbericht wurde für alle Patentansprüche erstellt

| Recherchenort | Abschlußdatum der Recherche | Prüfer |
|---|---|---|
| BERLIN | 20 FEBRUAR 1991 | MERCKX A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument